Europäisches Patentamt

European Patent Office

Office européen des brevets

(11) Publication number: **0 514 054 A1**

# EUROPEAN PATENT APPLICATION

(21) Application number: **92303992.9**

(22) Date of filing: **01.05.92**

(51) Int. Cl.5: **B62B 7/14**

(30) Priority: **18.05.91 GB 9110794**

(43) Date of publication of application:
**19.11.92 Bulletin 92/47**

(84) Designated Contracting States:
**DE FR GB IT**

(71) Applicant: **BRITAX-TEUTONIA
KINDERWAGENFABRIK GmbH
Postfach 1454
W-4901 Hiddenhausen(DE)**

(72) Inventor: **Goetting, Bernd
Minden-Weseler-Weg 160
W-4904 Enger(DE)**

(74) Representative: **Hollinghurst, Antony
B.S.G. International plc Patent Department
Castle Trading Estate East Street
Portchester, Hampshire PO16 9SD(GB)**

(54) **Pram.**

(57) A pram has a body (10), a chassis (14) and a latch mechanism for detachably securing the body (10) to the chassis (14). The chassis (14) includes a pair of parallel rails (30) on which the body (10) is supported and the latch mechanism comprises two pairs of latch members (68, 70) on the body (10), each pair of latch members (68, 70) being adapted to engage with a respective one of the parallel rails (30). Each pair of latch members (68, 70) is coupled to a common actuating handle (46) on the corresponding side of the body (10).

Fig.4.

Fig.3.

EP 0 514 054 A1

This invention relates to a pram of the type having a body, a chassis and a latch mechanism for detachably securing the body to the chassis, the chassis including a pair of parallel rails on which the body is supported and the latch mechanism comprising two pairs of latch members on the body, each pair of latch members being adapted to engage with a respective one of the parallel rails.

In a known pram of this type, each latch member comprises a clip arranged to engage with a respective one of the parallel rails. It is necessary to engage and release each clip separately. Consequently, during the engagement and release processes, there is a time when the body is secured to the chassis only by a single clip. This is not a very safe configuration and consequently it is unwise to fit the body on to the chassis or remove it therefrom when there is a baby within the body. The present invention aims to provide a pram which is not subject to this disadvantage.

According to the invention, in a pram of the type described above, each pair of latch members is coupled to a common actuating handle on the corresponding side of the pram body. With this arrangement, an adult can actuate all four latch members simultaneously by grasping the two actuating handles.

Preferably, the handles are so coupled to the latch members that upward angular movement thereof moves the latch members to their released positions. This arrangement has the advantage that the handles can be used to support the pram body when it is being lifted off or on to the chassis, the latch members being held in their released position during such lifting operation. Each actuating handle may be pivotally mounted for angular movement about an axis parallel to the parallel rails of the chassis so as to be positioned below such pivot axis in close proximity to the adjacent side of the pram body when the latched members are in their engaged positions.

In one form of the invention, each latch member comprises an L-shaped lever having a notch in one arm arranged to engage with a detent formation on the corresponding parallel rail, a connecting rod coupling the other arm of the L-shaped lever to an eccentrically located pivot on the actuating handle.

An embodiment of the invention will now be described, by way of example, with reference to the accompanying drawings in which:

Figure 1 is a perspective view of a plan in accordance with the invention with the body secured to the chassis;

Figure 2 is an elevational view of the latch mechanism on one side of the body with the latch plates in their engaged position; and

Figures 3 and 4 are views corresponding to Figures 1 and 2 but with the body removed from the chassis and the latch members in their released position.

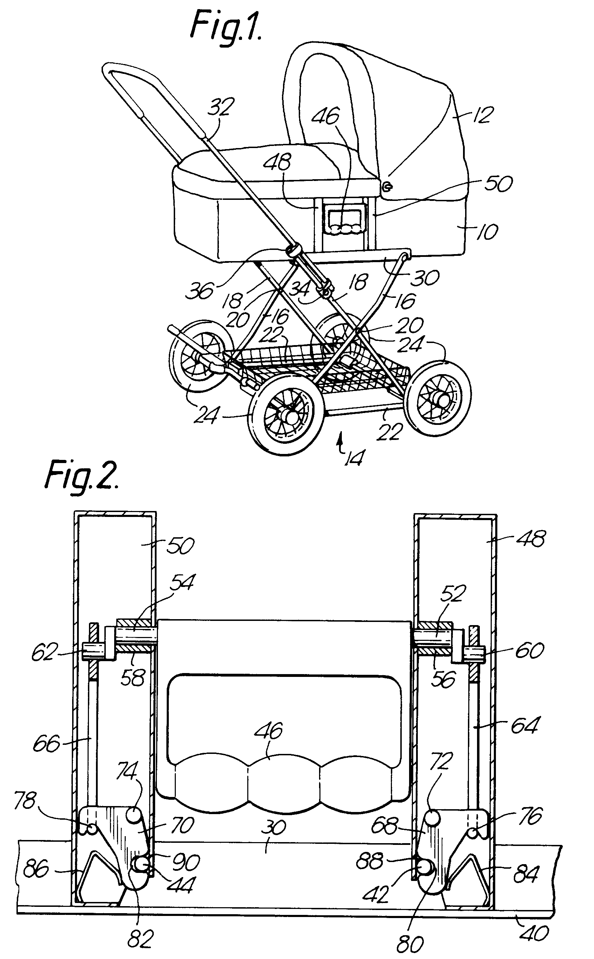

Referring to Figure 1, a pram has a body 10 with a hood 12 supported on a chassis 14. The chassis 14 is of known type, having a pair of side frames, each of which comprises a pair of support members 16 and 18 which are interconnected at their midpoint by a pivot joint 20. The lower ends of the support members 16 and 18 are connected by respective flexible links (not shown) to a bottom frame member 22 which has wheels 24 at each end. The support member 16 which extends upwardly from a rear wheel 24, has its upper end pivotally connected to the front end of a horizontal rail 30, the rear end of which is pivotally connected to a hand 32. The bottom end of the handle 32 is connected by a pivot joint 34 to the side member 18 at an intermediate position between its upper end and the pivot joint 20. A clip 36 secures the handle 32 parallel to the member 18 when the chassis 14 is in its erected position. Release of the catch 18 allows the handle 32 to pivot forwardly, allowing the chassis to be folded so as to bring the support member 30 closer to the base member 14. A folding chassis of this type is already known and the folding action will not be described further.

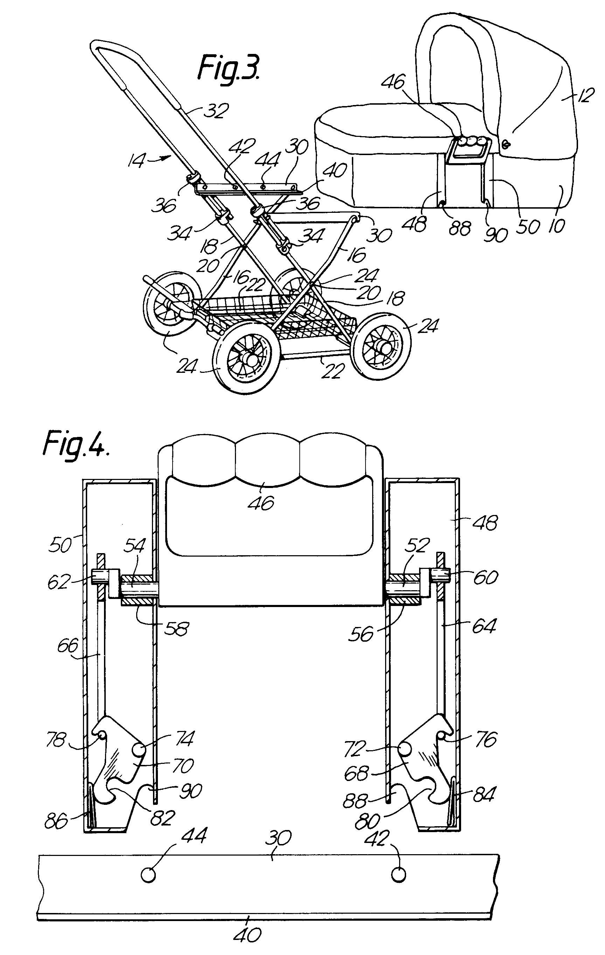

As can best be seen from Figure 3, each of the rails 30 is of L-shaped cross-section having an inwardly directed flange on its bottom edge. Each support member 30 also has a pair of inwardly directed studs 42 and 44 on its vertical wall.

The pram body has a respective latch mechanism for engagement with the studs 42 and 44 on each support member 30. As can be seen from Figures 1 and 3, each latch mechanism consists of a rectangular actuating handle 46 located between two vertically extending mechanism housings 48 and 50.

As can be Seen from Figures 2 and 4, the handle 46 has a pair of stub axles 52 and 54 which are journalled in bearings 56 and 58 in the housings 48 and 50 respectively. The stub axles 56 and 58 have respective cranked ends 60 and 62 on which are journalled the upper ends of respective connecting rods 64 and 66.

A respective latch plate 68, 70 is pivotally mounted in the lower end of each housing 48, 50 on a corresponding pivot bearing 72, 74. The latch plates 68 and 70 are generally L-shaped and one limb thereof is engaged by a projection 76, 78 on the corresponding connecting rod 64, 66. The other limb of each latch plate 68, 70 has a notch 80, 82 on its inner face, while its outer face is engaged by a respective leaf spring 84, 86 arranged to bias the notches 80, 82 towards one another. Each of the housings 48 and 50 has a respective cutaway portion 88, 90 extending upwardly from its lower edge to the level of the notches 82 and 84.

When the pram body 10 is positioned on the support members 30, the handles 46 are pivoted to the position shown in Figures 1 and 2, in which the connecting rods 64 and 66 are in their lowermost positions so that the springs 84 and 86 bias the notches 80 and 82 into engagement with the studs 42 and 44 on the support members 30.

When it is desired to remove the pram body 10 from the chassis 14, the two handles 46 are grasped and pulled outwardly and upwardly to the positions illustrated in Figures 3 and 4. This causes the connecting rods 64 and 66 to pull the latch plates 68 and 70 out of engagement with the studs 42 and 44. The pram body 10 can then be lifted clear of the chassis 14 by means of the handles 46.

When it is desired to replace the body 10 on the chassis 14, the body 10 is picked up by the handles 46 and positioned on the support rails 30. The handles are then pivoted downwardly to the position illustrated in Figures 1 and 2, allowing the latch plates 68 and 70 to engage with the studs 42 and 44. Since the handles 46 are held by the user from the time when the pram body 10 is picked up until after the latch plates 68 and 70 have engaged with the stubs 42 and 44, the pram body 10 is secure at all times and can, therefore, safely be positioned on and removed from the chassis 14 with a baby inside.

## Claims

1.  A pram having a body (10), a chassis (14) and a latch mechanism for detachably securing the body (10) to the chassis (14), the chassis (14) including a pair of parallel rails (30) on which the body (10) is supported and the latch mechanism comprising two pairs of latch members (68, 70) on the body (10), each pair of latch members (68, 70) being adapted to engage with a respective one of the parallel rails (30) characterised in that each pair of latch members (68, 70) is coupled to a common actuating handle (46) on the corresponding side of the body (10).

2.  A pram according to claim 1, wherein the handles (46) are so coupled to the latch members (68, 70) that upward angular movement thereof moves the latch members (68, 70) to their released positions.

3.  A pram according to claim 1, wherein each actuating handle (46) is pivotally mounted for angular movement about an axis parallel to the parallel rails (30) of the chassis (14) so as to be positioned below such pivot axis in close proximity to the adjacent side of the body (10) when the latch members (68, 70) are in their engaged positions.

4.  A pram according to claim 1, wherein each latch member comprises an L-shaped lever (68, 70) having a notch (80, 82) in one arm arranged to engage with a detent formation (42, 44) on the corresponding parallel rail (30), a connecting rod (64, 66) coupling the other arm of the L-shaped lever (68, 70) to an eccentrically located pivot (60, 62) on the actuating handle (46).

## Fig.1.

## Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-753 337 (W.J.HARRIS & CO. LTD.) | 1-3 | B62B7/14 |
| A | * page 1, line 55 - page 2, line 103; figures * | 4 | |
| | --- | | |
| A | GB-A-1 014 004 (LINES BROS. LTD.) | 1-3 | |
| | * figures * | | |
| | ----- | | |
| | | | **TECHNICAL FIELDS SEARCHED (Int. Cl.5 )** |
| | | | B62B |

The present search report has been drawn up for all claims

| Place of search | Date of completion of the search | Examiner |
|---|---|---|
| THE HAGUE | 26 AUGUST 1992 | FRANKS B.G. |